# EUROPEAN PATENT APPLICATION

(11) **EP 4 600 133 A1**
(43) Date of publication of application: **13.08.2025**
(21) Application number: 25156048.8
(22) Date of filing: 05.02.2025
(51) Int. Cl.: B62K 5/06, B62K 3/06, B62K 19/10, B62K 19/28, B62K 19/34, B62K 7/02

(54) **VEHICLE FRAME AND MOBILITY VEHICLE**

(30) Priority: 09.02.2024 JP 2024018393
(71) Applicant: Tsubakimoto Chain Co., Osaka 530-0005 (JP)
(72) Inventor: NAKAGOSHIKI, Keita, Osaka, 530-0005 (JP); SAITO, Yusuke, Osaka, 530-0005 (JP)
(74) Representative: dompatent von Kreisler Selting Werner - Partnerschaft von Patent- und Rechtsanwälten mbB

(57) **Abstract**

To provide a vehicle frame and a mobility vehicle that are simple-structured and easily producible, and that allow for great flexibility in design layout. The vehicle frame (100) of the present invention supports a running unit in a mobility vehicle, the running unit including a pivot arm configured to pivot about a pivot shaft, and a wheel mounted to the pivot arm. The vehicle frame includes two main plates (110L, 110R) spaced apart and facing each other, and a roof plate (120) that joins the two main plates.

## Description

### BACKGROUND OF THE INVENTION

### 1. Field of the Invention

The present invention relates to a vehicle frame that supports a running unit including wheels in a mobility vehicle such as a two-wheeled or three-wheeled vehicle, and a mobility vehicle.

### 2. Description of the Related Art

Mobility vehicles such as known two-wheeled or three-wheeled vehicles commonly include a vehicle frame that supports a running unit. The frame is usually formed by welding a large number of pipes. Japanese Patent Application Publication No. 2023-72498, for example, discloses a main body frame 510 including a main pipe 511 and an upper reinforcing pipe 512 extending in the front and back direction. The main body frame connects a handle post 520, which carries a front wheel 521 below and a handle 522 above for controlling the turning direction of the front wheel 521, with a support member 533 of a pivot shaft to which two rear wheels 531 are coupled. Further, a saddle tube 540 with a saddle 541 on top is joined to a center region of the main body frame.

### SUMMARY OF THE INVENTION

However, the main body frame 510 according to Japanese Patent Application Publication No. 2023-72498 requires a process of bending pipes, and sometimes a process of attaching additional brackets to form the shape of the mobility vehicle or to mount the components. The production process is complex and involves a large number of steps.

To reinforce the saddle tube 540, it is necessary to provide a large seat stay 545 behind the saddle tube 540 to connect to the main pipe 511, which extends from the handle post 520 for connecting the handle 522 to the pivot shaft of the rear wheels 531. This prevents the vehicle from having an open space behind the saddle tube 540.

The present invention aims to solve these problems, and to provide a simple-structured, easily producible vehicle frame that allows great design flexibility, and a mobility vehicle.

The present invention achieves the above object by providing a vehicle frame supporting a running unit in a mobility vehicle, the running unit including a pivot arm configured to pivot about a pivot shaft, and a wheel mounted to the pivot arm.

The vehicle frame includes two main plates spaced apart and facing each other, and a roof plate that joins the two main plates.

A mobility vehicle of the present invention includes a main body having the above-described vehicle frame, a front running part having a wheel, and a rear running part having a wheel, at least one of the front running part and the rear running part being supported by the vehicle frame.

The vehicle frame according to the present invention, with two main plates spaced apart and facing each other and a roof plate that joins the two main plates, has a substantially box-shaped frame structure as a whole mainly composed of the plates. This structure allows various components such as a running mechanism to be positioned in the space between the main plates as required, while maintaining the strength required to connect various parts of the vehicle. The vehicle frame mainly made up of plates allows various components to be directly attached, simply by forming an attachment hole at a suitable position in the plates, without the need to join a bracket or the like. Thus the vehicle frame enables easy production of mobility vehicles and allows for great flexibility in design layout.

The vehicle frame according to the present invention may further include a gusset plate provided between a seat tube joined to the roof plate and the roof plate such as to fill a corner therebetween. This configuration provides sufficient strength to the seat tube, obviating the need for a large seat stay or the like extending from an upper part of the seat tube to the roof plate. This frees up a large amount of space behind the seat tube.

### BRIEF DESCRIPTION OF THE DRAWINGS

FIG. 1 is a perspective view illustrating a configuration example of a vehicle frame according to the present invention;
FIG. 2 is a perspective view illustrating the vehicle frame of FIG. 1 from a different angle;
FIG. 3 is a front view of the vehicle frame of FIG. 1;
FIG. 4 is a top view of the vehicle frame of FIG. 1;
FIG. 5 is a top view of the main plates of the vehicle frame of FIG. 1; and
FIG. 6 is a perspective view illustrating a configuration example of a conventional mobility vehicle.

### DESCRIPTION OF THE PREFERRED EMBODIMENTS

The vehicle frame of the present invention supports a running unit of a mobility vehicle, and includes two main plates spaced apart and facing each other, and a roof plate joining the two main plates. The strength required to connect various parts of the mobility vehicle is maintained while various components such as a running mechanism can be positioned in the space between the main plates as required. Various components can be directly mounted to the vehicle frame simply by forming an attachment hole at a suitable position in the plates, without the need to join a bracket or the like. The vehicle frame thus enables easy production of mobility vehicles and allows for great flexibility in design layout. The vehicle frame can have any specific configurations as long as it provides these effects.

### Vehicle Frame

The vehicle frame according to the present invention is a frame that supports a running unit of a mobility vehicle. Examples of mobility vehicles include a variety of multi-wheel vehicles such as, but not limited to, two-wheeled vehicles with one each front wheel and rear wheel, three-wheeled vehicles with one front wheel and two rear wheels, and three-wheeled vehicles with two front wheels and one rear wheel.

A vehicle frame 100 according to one embodiment of the present invention is described below with reference to the drawings.

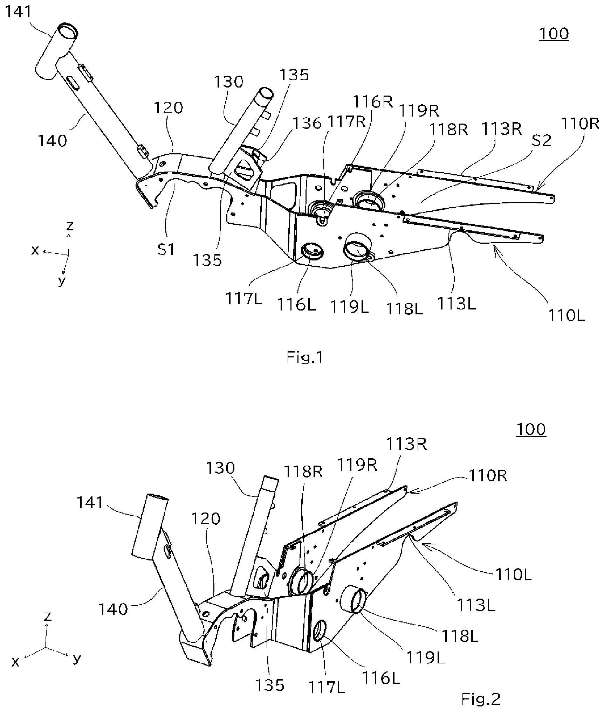

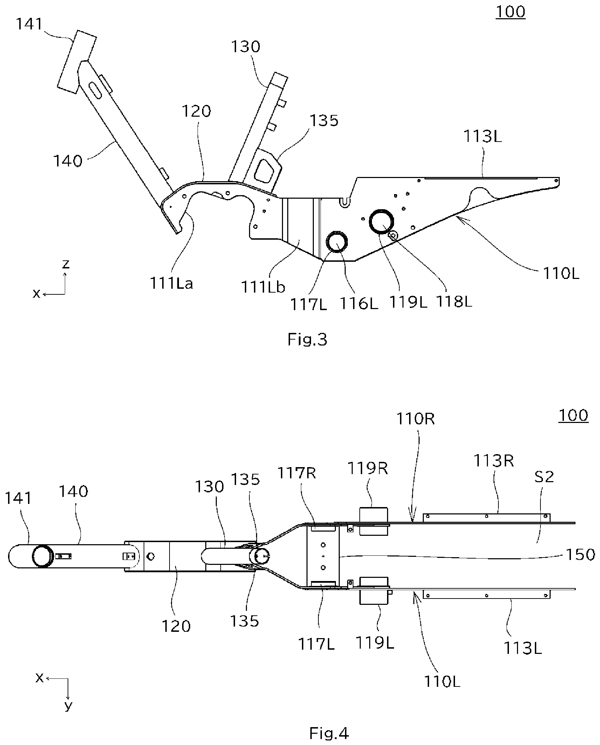

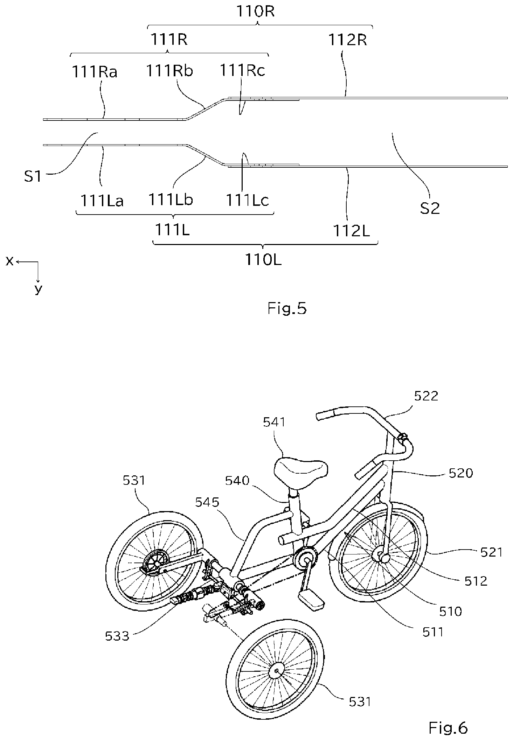

The vehicle frame 100 according to one embodiment of the present invention is used as the frame of a three-wheeled vehicle having one front wheel and two rear wheels. As shown in FIG. 1 to FIG. 5, the vehicle frame has a substantially box-shaped frame structure, including two main plates 110L and 110R spaced apart (front space S1 and rear space S2) and facing each other, and a roof plate 120 that joins the two main plates 110L and 110R.

Each main plate 110L (110R) is formed by a front plate 111L (111R) and a rear plate 112L (112R) welded together in the overlapped portion. The front plate 111L (111R) includes a front flat portion 111La (111Ra), a bent portion 111Lb (111Rb) at the back of and continuous from the front flat portion 111La (111Ra), bent outward in the left and right direction (y-axis direction in the drawing), and a rear flat portion 111Lc (111Rc) at the back of the bent portion 111Lb (111Rb), continuously extending in the front and back direction.

The rear plate 112L (112R) is substantially in the form of a flat plate.

The front plate 111L (111R) and the rear plate 112L (112R) are welded together at an outer side face of the rear flat portion 111Lc (111Rc) and an inner side face of a front portion of the rear plate 112L (112R), to form the one-piece main plate 110L (110R).

The main plates 110L and 110R are arranged along a vertical plane (xz plane) extending both in the front and back direction (x-axis direction in the drawing) and the up and down direction (z-axis direction in the drawing) such as to be substantially plane-symmetrical with each other. A front space S1 and a rear space S2 are formed respectively between front regions and rear regions of the main plates 110L and 110R.

More specifically, the front flat portions 111La and 111Ra and rear flat portions 111Lc and 111Rc of the front plates 111L and 111R, and the rear plates 112L and 112R, of the main plates 110L and 110R, are arranged parallel to each other along the xz plane. The bent portions 111Lb and 111Rb are arranged substantially plane-symmetrically with each other along the planes that have an angle in the xy plane relative to the xz plane (vertical planes oriented diagonally rearwards). The angle of the main plates 110L and 110R is not limited to this arrangement where they are parallel to each other along the xz plane. The main plates may be arranged at an angle relative to each other with respect to the xz plane depending on the vehicle design or features.

The roof plate 120 is welded over the front plates 111L and 111R that form the front region of the main plates 110L and 110R, joining together the upper ends (side edges) and front ends (front edges) of the front flat portions 111La and 111Ra. This forms the front space S1 surrounded by the two front flat portions 111La and 111Ra and the roof plate 120. The roof plate 120 is a long strip of plate bent in a substantially L shape. The bent inner contour conforms to the outer edge contours of the upper ends and front ends of the front flat portions 111La and 111Ra of the front plates 111L and 111R. The upper ends and front ends of the front flat portions 111La and 111Ra are welded to the inner surface of the roof plate 120.

The rear space S2 is formed between the two rear plates 112L and 112R that form the rear region of the main plates 110L and 110R. A flat floor plate 150 is welded to the lower ends of the overlapping portions where the two rear plates 112L and 112R are welded respectively to the rear flat portions 111Lc and 111Rc of the front plates 111L and 111R, joining the main plates together. The floor plate 150 added to the vehicle frame 100 makes the substantially box-shaped frame structure of the vehicle frame 100 more rigid, enhancing the overall strength of the mobility vehicle.

The distance between the rear plates 112L and 112R that form the rear space S2 is larger than the distance between the front flat portions 111La and 111Ra of the front plates 111L and 111R that form the front space S1. This structure allows a narrow seat part to be formed across the front space S1, and also ensures that there is a sufficient distance between the two rear wheels, which are to be mounted on the left and right outer sides of the rear space S2.

Specific distances between the main plates 110L and 110R may be suitably determined based on the types and arrangements of the components.

The main plates 110L and 110R need only be made of a material of sufficient strength and thickness to support the mobility vehicle.

The main plates 110L and 110R need not be completely symmetrical to each other. The main plates 110L and 110R may have any outer contours (along the xz plane and along the vertical planes oriented diagonally rearwards), which may be suitably determined in accordance with the arrangement of other components or for weight reduction, as long as the portions where the roof plate 120 and the floor plate 150 are joined have a contour suitable for the joining. Some through holes may be formed in the main plates as required in accordance with the arrangement of other components or for weight reduction.

As examples of such through holes in the main plates 110L and 110R, the vehicle frame 100 according to one embodiment of the present invention has linking shaft through holes 116L and 116R and pivot shaft through holes 118L and 118R formed in the overlapping portions of the main plates 110L and 110R.

A linking shaft of a pivot motion transmission of the running unit to be described later is passed through the linking shaft through holes 116L and 116R via bosses 117L and 117R. A pivot shaft is passed through the pivot shaft through holes 118L and 118R via bosses 119L and 119R. The rear wheels are each connected on the left and right outer sides of the main plates 110L and 110R via pivot arms and rotating shafts coupled to the pivot shaft.

Flanges 113L and 113R protrude outwardly from the upper ends (side edges) of the rear plates 112L and 112R of the main plates 110L and 110R to allow a cargo bed or the like to be coupled.

In the vehicle frame 100 according to one embodiment of the present invention, a pipe-like seat tube 130, for a saddle (not shown) to be mounted at the upper end, is welded to a flat portion of the roof plate 120 to extend from a center region diagonally upward and rearward.

To reinforce the seat tube 130, gusset plates 135 are provided to fill the corner of the joint between the seat tube 130 and the roof plate 120. To "fill the corner of the joint" here refers to a condition where small, substantially rectangular gusset plates 135 are provided at the foot in the back of the seat tube 130, with their front and bottom sides being respectively welded to the seat tube 130 and a rear region of the roof plate 120. In this embodiment, the two gusset plates 135 are joined there at an angle to each other, more specifically, so that they open away from each other towards the rear. Moreover, to enhance the reinforcing effect, the two gusset plates 135 are welded together by an auxiliary plate 136.

The gusset plates 135 have five sides but appear to be essentially rectangular with three non-welded open sides. The gusset plates are not limited to this shape. They may for example have a front side and a bottom side, and a non-welded circular arc open side. The gusset plates may be polygonal, with more than three open sides, or they may be completely quadrilateral.

The gusset plates 135 may be half or less the height of the seat tube 130 in the up and down direction and smaller in the front and back direction than the height in the up and down direction.

The upper and rear sides of the gusset plates 135 may be open.

The front region of the roof plate 120 extends diagonally downwardly towards the front end. A pipe-like down tube 140 is welded to this front region of the roof plate 120 such as to protrude upwardly so that a component associated with a handle (not shown) can be coupled to the upper end. More specifically, a pipe-like handle post (not shown) having a handle at the top end and a front wheel (not shown) at the bottom end can be coupled to a head tube 141, which is welded at the top end of the down tube 140.

### Mobility Vehicle

The mobility vehicle of the present invention includes a main body having the vehicle frame 100 described above, a front running part having a front wheel, and a rear running part having a rear wheel, at least one of the front running part and the rear running part being supported by the vehicle frame 100.

The mobility vehicle according to one embodiment of the present invention is a three-wheeled vehicle having one front wheel and two rear wheels. The vehicle can make use of a running unit (not shown) as its rear running part including: a pivot motion transmission connected to the vehicle frame 100; a pair of left and right pivot arms provided to the pivot motion transmission such as to be pivotable about a pivot shaft; and wheels each rotatably connected to each of the pivot arms.

While one embodiment of the present invention has been described above in detail, the present invention is not limited to the embodiment described above. Various design changes may be made without departing from the scope of the claims set forth in the claims.

For example, the vehicle frame according to the present invention can be used for various types of vehicles that run on wheels, such as engine- or motor-driven vehicles, human-powered bicycles or cargo-carrying carts.

## Claims

1. A vehicle frame supporting a running unit in a mobility vehicle, the running unit including a pivot arm configured to pivot about a pivot shaft, and a wheel mounted to the pivot arm, the vehicle frame comprising:
two main plates spaced apart and facing each other; and
a roof plate joining the two main plates.

2. The vehicle frame according to claim 1, wherein the roof plate joins together front regions of the main plates, and
the vehicle frame further comprises a floor plate that joins together rear regions of the main plates.

3. The vehicle frame according to claim 2, wherein the main plates are spaced apart wider in rear regions where the floor plate is provided than in front regions where the roof plate is provided.

4. The vehicle frame according to claim 1, wherein the mobility vehicle includes a saddle, and
the vehicle frame further comprises a seat tube joined to a center region of the roof plate to extend upwardly for the saddle to be mounted at an upper end thereof.

5. The vehicle frame according to claim 4, further comprising a gusset plate provided between the seat tube and the roof plate such as to fill a corner therebetween.

6. The vehicle frame according to claim 1, wherein the mobility vehicle includes a handle, and
the vehicle frame further comprises a down tube joined to a front region of the roof plate to extend upwardly for a component associated with the handle to be mounted at an upper end thereof.

7. A mobility vehicle comprising a main body including the vehicle frame according to any one of claims 1 to 6, a front running part having a front wheel, and a rear running part having a rear wheel,
at least one of the front running part and the rear running part being supported by the vehicle frame.
